(19) Europäisches Patentamt
European Patent Office
Office européen des brevets

(11) **EP 2 199 826 B1**

(12) # FASCICULE DE BREVET EUROPEEN

(45) Date de publication et mention de la délivrance du brevet:
**26.02.2014 Bulletin 2014/09**

(51) Int Cl.:
***G01S 13/93*** *(2006.01)* ***G01S 7/41*** *(2006.01)*

(21) Numéro de dépôt: **09178974.3**

(22) Date de dépôt: **11.12.2009**

(54) **Procédé de détection d'un objet cible pour véhicule automobile**

Erfassungsverfahren eines Zielobjekts für ein Kraftfahrzeug

Method for detecting a target object for an automobile

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0807165**

(43) Date de publication de la demande:
**23.06.2010 Bulletin 2010/25**

(73) Titulaire: **VALEO VISION**
**93012 Bobigny (FR)**

(72) Inventeur: **Kuoch, Siav Kuong**
**94100 Saint Maur des Fossés (FR)**

(56) Documents cités:
**EP-A- 1 020 736**
**EP-A- 1 094 336**
**US-A- 5 929 803**
**US-A1- 2003 174 054**
**US-B1- 6 249 243**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 2 199 826 B1

## Description

### Domaine de l'invention

La présente invention concerne un procédé de détection d'un objet cible pour véhicule automobile, et un dispositif de détection permettant de mettre en oeuvre ledit procédé.

Elle trouve une application particulière dans le domaine des véhicules automobiles.

### État de la technique

Dans le domaine des véhicules automobiles, un état de la technique antérieur connu de procédé de détection d'un objet cible pour véhicule automobile permet par balayage radar de l'environnement avant du véhicule automobile de retourner des informations comprenant un ensemble de points représentatifs des objets cibles, tels que des véhicules suivi ou croisé. Un tel procédé est mis en oeuvre par un radar monté à l'avant d'un véhicule automobile.

Un inconvénient de cet état de la technique antérieur est que les informations retournées par le radar sont souvent bruitées et instables et qu'il est ainsi difficile de différencier les objets cibles du bruit, un objet fixe d'un objet mobile, et enfin un objet proche d'un autre qui se trouvent dans l'environnement du véhicule automobile.

Le document US6249243 décrit un procédé du type de celui du préambule de la revendication 1 de la présente demande.

### Objet de l'invention

La présente invention a pour but un procédé de détection d'un objet cible pour véhicule automobile, qui permet de résoudre le problème énoncé ci-dessus.

Selon un premier objet de l'invention, ce but est atteint par procédé de détection d'un objet cible pour véhicule automobile, **caractérisé en ce qu**'il comporte les étapes de :

- corriger une position d'au moins un point cible par rapport à un véhicule automobile, en fonction d'un déplacement du véhicule automobile sur un nombre de cycles déterminé ;
- à partir d'au moins un point cible, former un premier groupe avec des points cibles voisins en fonction d'une première caractéristique déterminée ;
- vérifier si le premier groupe est homogène en fonction d'une deuxième caractéristique déterminée ; et
- calculer une position d'un groupe formé par rapport au véhicule automobile sur le nombre de cycles déterminé, un groupe formé correspondant à un objet cible.

Comme on va le voir en détail par la suite, le fait de regrouper des points cibles et de vérifier leur homogénéité va permettre notamment de différencier des objets cibles (selon leur vitesse, et du bruit), et de calculer leur position de façon fiable.

Selon des modes de réalisation non limitatifs, le procédé présente en outre les caractéristiques suivantes.

- Le procédé comporte une étape supplémentaire de détecter une pluralité d'objets cibles dans un environnement du véhicule automobile par rapport au véhicule automobile, résultant en une pluralité de points cibles représentatifs et en leur position respective. La connaissance de ce paramètre position va permettre d'automatiser le suivi de ce dernier par la suite.
- L'étape de former un premier groupe comporte une sous étape d'appliquer la première caractéristique déterminée de manière successive aux points voisins. Cela permet de limiter le nombre de calculs.
- Le procédé comporte une étape supplémentaire de supprimer tout premier groupe comprenant un nombre de points cibles inférieur à un premier nombre déterminé. Cela permet d'éliminer des premiers groupes qui sont très petits et donc considérés comme du bruit.
- La deuxième caractéristique déterminée est une puissance. Cela permet de différencier un objet cible d'un autre, chaque objet renvoyant une énergie différente.
- La deuxième caractéristique déterminée est une vitesse. Cela permet de différencier des objets cibles qui sont mobiles ou fixes.
- Le procédé comporte une étape supplémentaire selon laquelle si un groupe est hétérogène, on regroupe des points cibles d'un premier groupe autour de deux points cibles de référence, le tout formant deux deuxièmes groupes, de manière à minimiser l'inertie d'un deuxième groupe. Cela permet de différencier deux objets cibles qui sont proches l'un de l'autre.
- Le regroupement en un deuxième groupe s'effectue au moyen d'un indice de Ward. Cela permet d'avoir des deuxièmes groupes de points cibles homogènes sans calculer l'inertie d'un deuxième groupe.

- Le procédé comporte une étape supplémentaire de : à partir d'au moins un point cible d'un deuxième groupe, former un premier groupe avec des points cibles voisins en fonction d'une première caractéristique déterminée. Cela permet d'éliminer des deuxièmes groupes qui sont très petits et donc considérés comme du bruit.
- La première caractéristique déterminée est une distance inférieure à un seuil de distance entre un point cible et des points cibles voisins. Cela permet de limiter le nombre de calculs.
- Le calcul d'une position d'un groupe s'effectue latéralement et longitudinalement. On caractérise ainsi la position.
- Le procédé comporte une étape supplémentaire d'appliquer un filtre de Kalman sur deux positions successives d'un groupe formé. Cela permet de stabiliser le calcul d'une position dans le temps.

Selon un deuxième objet de l'invention, elle concerne un dispositif de détection d'un objet cible pour véhicule automobile, **caractérisé en ce qu**'il comporte une unité de contrôle pour :

- corriger une position d'au moins un point cible par rapport à un véhicule automobile, en fonction d'un déplacement du véhicule automobile sur un nombre de cycles déterminé ;
- à partir d'au moins un point cible, former un premier groupe avec des points cibles voisins en fonction d'une première caractéristique déterminée ;
- vérifier si le premier groupe est homogène en fonction d'une deuxième caractéristique déterminée ; et
- calculer une position d'un groupe formé par rapport au véhicule automobile sur le nombre de cycles déterminé, un groupe formé correspondant à un objet cible.

Selon un mode de réalisation non limitatif, le dispositif comporte en outre un détecteur pour détecter une pluralité d'objets cibles dans un environnement du véhicule automobile par rapport au véhicule automobile, résultant en une pluralité de points cibles représentatifs et en leur position respective.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

## Brève description des figures

D'autres caractéristiques et avantages de la présente invention seront mieux compris à l'aide de la description et des dessins non limitatifs parmi lesquels :

- la Fig. 1 représente un organigramme du procédé de détection selon l'invention selon un mode de réalisation non limitatif ;
- la Fig. 2 représente une image d'un environnement avant d'un véhicule automobile comprenant différents objets cibles aptes à être détectés par un radar, selon une étape du procédé de détection de la Fig. 1 ;
- la Fig. 3 représente des points cibles renvoyés par un radar et représentatifs des objets cibles de la Fig. 2 ;
- la Fig. 4 représente des points cibles renvoyés par un radar et représentatifs des objets cibles de la Fig. 2 sur un nombre déterminé de cycles ;
- la Fig. 5 représente une formation d'un premier groupe à partir d'au moins un point cible de la Fig. 4, selon une étape du procédé de détection de la Fig. 1 ;
- la Fig. 6 représente des écart-types utilisés pour un calcul d'homogénéité d'un premier groupe, selon une étape du procédé de détection de la Fig. 1 ;
- la Fig. 7 représente une détermination de l'homogénéité d'un premier groupe de la Fig. 5 et la détermination de deux points cibles de référence, selon une étape du procédé de détection de la Fig. 1 ;
- la Fig. 8 représente un regroupement des points cibles d'un premier groupe avec un point cible de référence de la Fig. 7, le tout formant au moins un deuxième groupe, selon une étape du procédé de détection de la Fig. 1 ;
- la Fig. 9 représente un calcul de position d'un groupe, selon une étape du procédé de détection de la Fig. 1 ;
- la Fig. 10 représente un premier exemple non limitatif de points cibles obtenus à la Fig. 8 après un filtrage de Kalmann selon une étape du procédé de détection de la Fig. 1 ;
- la Fig. 11 représente une image de l'environnement avant du véhicule automobile avec les objets cibles détectés par le procédé de détection de la Fig. 1 ; et
- la Fig. 12 illustre un mode de réalisation non limitatif d'un dispositif de mise en oeuvre du procédé de la Fig. 1.

## Description détaillée de modes de réalisation non limitatifs de l'invention

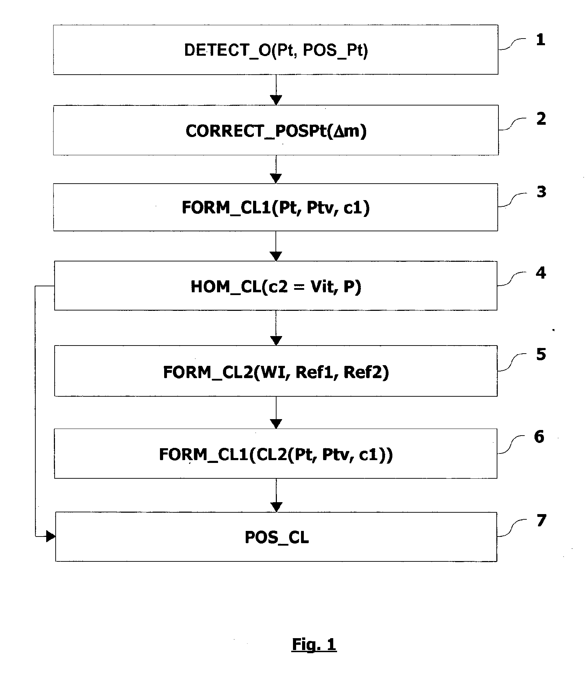

Le procédé de détection d'un objet cible pour véhicule automobile, selon l'invention, est décrit dans un mode de réalisation non limitatif à la Fig. 1.

Par véhicule automobile, on entend tout véhicule comprenant un moteur.

Le procédé de détection comporte les étapes suivantes telles qu'illustrées à la Fig 1 :

- corriger une position POS_Pt d'au moins un point cible Pt par rapport à un véhicule automobile V, en fonction d'un déplacement $\Delta$ m du véhicule automobile V sur un nombre de cycles déterminé Ncy (étape CORRECT_POSPt($\Delta$m)) ;
- à partir d'au moins un point cible Pt, former un groupe CL avec des points cibles voisins Ptv en fonction d'une première caractéristique déterminée c1 (étape FORM_CL(Pt, Ptv, c1)) ;
- vérifier si le groupe CL est homogène, en fonction d'une deuxième caractéristique déterminée c2 (étape HOM_CL (c2=Vit, P));
- calculer une position POS d'un groupe formé CL1, CL2 par rapport au véhicule automobile V sur le nombre de cycles déterminé Ncy, un groupe formé CL1 , CL2 correspondant à un objet cible O (étape POS_CL).

Dans un mode de réalisation non limitatif, le procédé comporte en outre une étape supplémentaire selon laquelle si un groupe est hétérogène, on regroupe des points cibles d'un premier groupe CL1 autour d'un point cible de référence Ref1, Ref2, le tout formant au moins un deuxième CL2, de manière à minimiser l'inertie du deuxième groupe CL2 (étape FORM_CL2(WI, Ref1, Ref2)).

Dans un mode de réalisation non limitatif, le procédé comporte en outre une étape supplémentaire de détecter une pluralité d'objets cibles O dans un environnement E du véhicule automobile par rapport au véhicule automobile V, résultant en une pluralité de points cibles Pt représentatifs et en leur position respective (étape DETECT_O(Pt, POS_Pt)).

On notera que cette étape supplémentaire peut ne pas être comprise dans le procédé décrit, mais peut faire partie d'un autre procédé exécuté en amont du procédé décrit.

Pour la suite de la description, dans le mode de réalisation non limitatif décrit, le procédé comprend cette étape supplémentaire.

Les étapes du procédé sont décrites en détail ci-après.

**Dans une première étape 1)**, on détecte une pluralité d'objets cibles O dans un environnement du véhicule automobile par rapport au véhicule automobile, résultant en une pluralité de points cibles Pt représentatifs et en leur position respective POS_Pt.

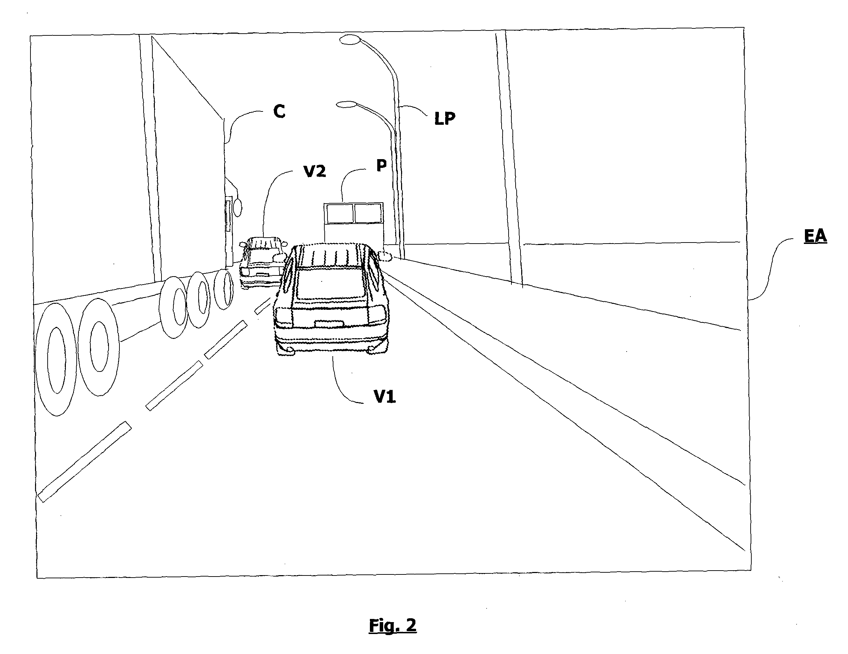

Un exemple d'environnement avant EA du véhicule automobile V est illustré sur la Fig. 2. Comme on peut le voir, l'environnement avant EA comporte les objets cibles suivants :

- un premier véhicule suivi V1 ;
- un deuxième véhicule suivi V2 ;
- un panneau de signalisation P ;
- un camion C ; et
- au moins un lampadaire LP.

La détection d'objets cibles O s'effectue au moyen d'un détecteur d'objets cibles tel qu'un radar RAD qui renvoie les informations suivantes

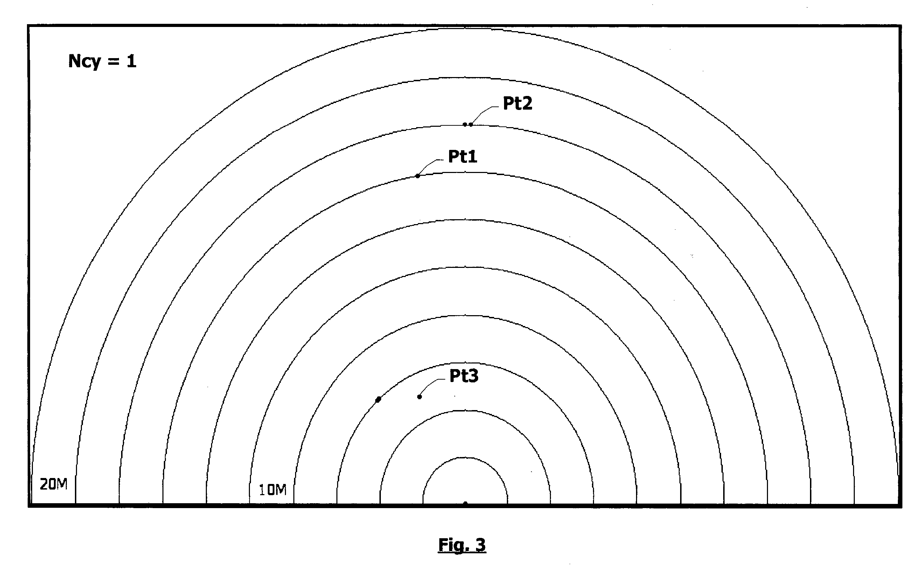

- des points cibles Pt correspondant aux objets cibles de l'environnement avant EA du véhicule automobile V (un exemple de points cibles Pt renvoyés est illustré sur la Fig. 3) ;
- une position POS_Pt desdits points cibles Pt par rapport au véhicule automobile V, la position comprenant :
    - une distance D d'un point cible par rapport au véhicule automobile V ;
    - un angle Beta d'un point cible Pt par rapport au radar ;
    - une vitesse radiale Vr d'un point cible Pt ;
    - une puissance P de l'écho réfléchi par un point cible Pt ; et
- des informations B correspondant à du bruit.

La détection par radar RAD étant connue de l'homme du métier, elle n'est pas décrite ici.

On notera cependant qu'un radar renvoie les informations ci-dessus au bout de 40 ms si l'on prend l'exemple non limitatif d'un radar fonctionnant à 24 Ghz. On parle d'un temps de cycle de 40 ms.

Par ailleurs, on notera qu'un tel radar RAD est efficace pour des vitesses entre 0 à 70km/h environ. En conséquence, la distance maximum d'un point cible Pt entre deux temps de cycle radar sera de 77 cm dans l'exemple pris non limitatif.

**Dans une deuxième étape 2)**, on corrige une position POS_Pt d'au moins un point cible Pt par rapport à un véhicule automobile V, en fonction d'un déplacement $\Delta m$ du véhicule automobile V sur un nombre de cycles déterminé Ncy.

Cette étape a pour but de stabiliser les données radar afin d'éviter les pertes de points cibles Pt.

En effet, le radar RAD renvoie une liste de points cibles. Il se peut qu'à un temps t, il détecte un point cible Pt, qu'il le perde au temps t+1, et que ce dernier réapparaisse plus tard.

Dans un mode de réalisation non limitatif, le nombre de cycles déterminé Ncy est égal à 5. Au-delà, on estime que les nuages de points cibles seraient trop denses pour pouvoir les exploiter et qu'il y aurait un recouvrement de nuages de points.

Ainsi, sur 5 cycles (c'est-à-dire sur 200ms pour l'exemple pris de temps de cycle de 40ms), on acquière un ensemble de points cibles Pt, et la correction s'effectue en :

- retranchant le déplacement en translation $\Delta V$ du véhicule automobile V (soit le trajet parcouru par le véhicule automobile V) à la distance D associée à chaque point cible Pt, à chaque cycle CY ; et
- retranchant le déplacement en rotation $\Delta r$ du véhicule automobile V (obtenu par la vitesse de lacet Vl du véhicule automobile) à l'angle Beta associé à chaque point cible Pt, à chaque cycle CY.

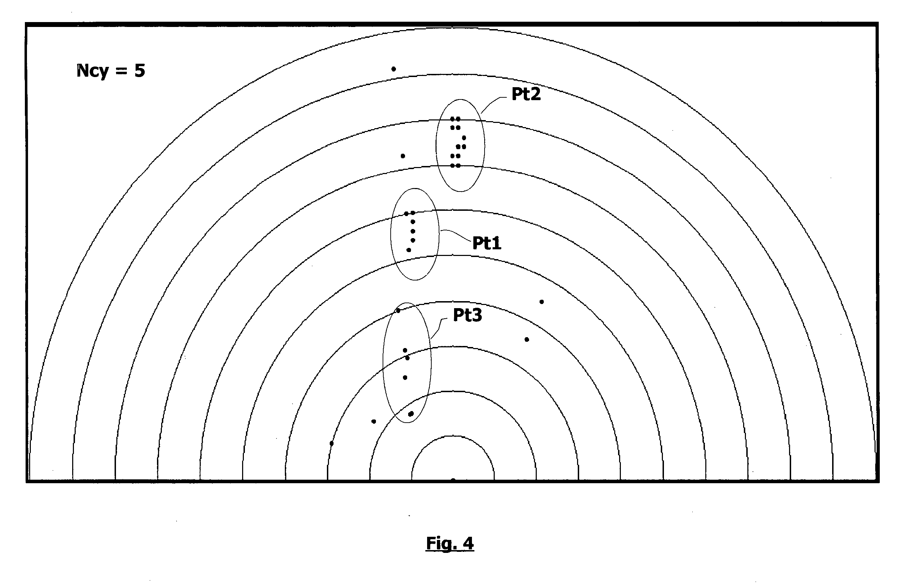

La Fig. 4 illustre un exemple non limitatif de résultat de la deuxième étape. Comme on peut le voir, on peut suivre le déplacement d'un point cible Pt au cours des 5 cycles dans l'exemple pris et donc d'un objet cible O correspondant.

On peut voir qu'il existe trois points cibles Pt1, Pt2 et Pt3 qui semblent correspondre à trois objets cibles qui sont mobiles, car chaque point cible forme un nuage sous forme de trainée de points sur les 5 cycles.

On notera que dans le cas d'un point cible qui correspond à un objet cible fixe, sur les 5 cycles, le résultat serait un nuage plus dense.

**Dans une troisième étape 3)**, à partir d'au moins un point cible Pt, on forme un premier groupe CL1 avec des points cibles voisins Ptv en fonction d'une première caractéristique déterminée c1.

On fait ainsi un regroupement dit « spatial ».

Comme on va le voir en détail ci-après, cette étape va permettre de :

- distinguer un objet cible fixe d'un objet cible mobile ;
- différencier les objets du bruit ; et
- différencier les objets entre eux.

Dans un mode de réalisation non limitatif, la première caractéristique déterminée c1 est une distance inférieure à un seuil de distance d1 entre un point cible Pt et des points cibles voisins Ptv. Dans un exemple non limitatif, ce seuil de distance d1 est égal à 1 mètre. En effet, pour une vitesse véhicule Vit de 70 km/h et un temps de cycle de 40 ms, la distance maximum D obtenue pour un point cible Pt ente deux cycles est de 77 cm comme vu précédemment. En arrondissant cette valeur, on arrive à 1 mètre.

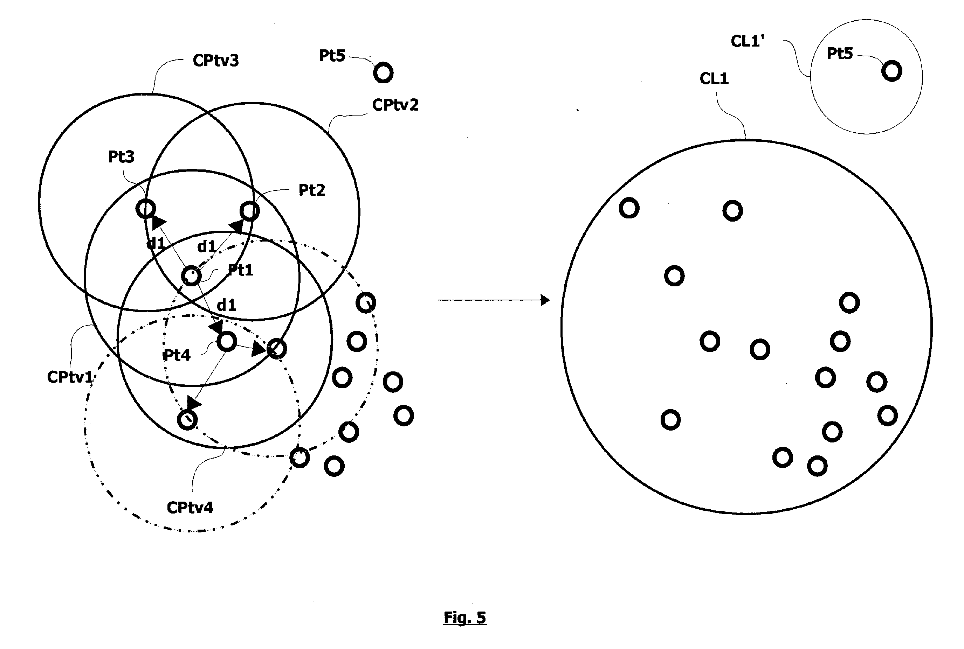

Dans l'exemple de la Fig. 5, on peut voir à gauche de la Fig. le résultat de la deuxième étape qui regroupe donc un ensemble de points cibles sur 5 cycles.

Dans cet ensemble, à partir d'un premier point cible déterminé Pt1, on détermine tous les points cibles voisins Ptv1 qui on une distance D inférieure à la valeur seuil d1 avec le premier point cible Pt1. Les points voisins Ptv1 qui remplissent ce critère de d1 égal à 1 mètre, dans l'exemple pris, se trouvent dans un premier cercle de voisinage Cptv1. Dans l'exemple de la Fig. 5, les points cibles Pt2, Pt3 et Pt4 sont des points voisins du premier point cible Pt1.

Puis à partir de chaque point voisin Ptv1 du premier point Pt1, on applique le même critère de voisinage de manière successive. Ainsi, dans un mode de réalisation non limitatif, l'étape de former un premier groupe CL1 comporte une sous-étape d'appliquer la première caractéristique déterminée c1 de manière successive au points voisins Ptv.

A la fin, on obtient un groupe CL1 qui regroupe tous les points de voisinage.

On effectue de nouveau un tel regroupement à partir d'un deuxième point cible déterminé, et on obtient ainsi un deuxième premier groupe CL1' et ainsi de suite. Dans l'exemple pris de la Fig. 5, le deuxième point cible est le point cible Pt5. En effet, ce point Pt5 n'appartient pas au groupe CL1 car ne fait pas des points cibles qui ont été trouvés au voisinage du premier point déterminé Pt1 ou de ses points voisins successifs.

Dans un mode de réalisation non limitatif, un point déterminé Pt pris en considération pour cette étape est un premier point rencontré lorsque le radar fait un balayage radar et qui n'appartient à aucun groupe. Dans un mode de réalisation non limitatif, le balayage radar correspond à un parcours de l'environnement avant du véhicule de gauche à droite selon un angle d'ouverture du radar RAD.

Dans un mode de réalisation non limitatif, lorsque les groupes sont formés, on supprime tout premier groupe CL1 comprenant un nombre de points cibles inférieur à un premier nombre déterminé nb1. Dans un exemple non limitatif, le premier nombre déterminé nb1 est égal à 3.

Cela permet de supprimer le bruit. En effet un premier groupe qui comprend un trop petit nombre de points cibles correspond à des informations bruitées provenant du radar RAD. Ainsi, dans l'exemple de la Fig. 5, le groupe CL1' est supprimé car il ne comprend qu'un seul point, le point Pt5. Ce groupe est trop petit pour être considéré comme un groupe et donc comme un objet cible O potentiel.

**Dans une quatrième étape 4)**, on vérifie si un premier groupe CL1 est homogène en fonction d'une deuxième caractéristique déterminée c2.

Dans un premier mode de réalisation non limitatif, la deuxième caractéristique déterminée c1 est une puissance associée P.

Dans un deuxième mode de réalisation non limitatif, la deuxième caractéristique déterminée c2 est une vitesse associée Vit.

Ces deux critères vont permettre de juger de l'homogénéité d'un premier groupe CL1 comme on va le voir ci-après.

En ce qui concerne la puissance P, plus un objet cible est grand et métallique, plus il renvoie de la puissance. Il existe donc des écarts de puissance selon les différents objets cibles. Ainsi, une moto, une voiture ou encore un camion vont renvoyer une puissance différente.

En ce qui concerne la vitesse Vit, il existe des écarts de vitesse entre deux objets et en particulier entre un objet cible mobile et un objet cible fixe.

Comme on va le voir ci-après, on peut ainsi séparer deux objets cibles proches avec des écarts de vitesses, ou avec des écarts de puissance, et en particulier un objet cible mobile d'un objet cible fixe.

Dans une variante de réalisation non limitative, afin de calculer l'homogénéité d'un premier groupe CL1 en fonction d'un critère de puissance P et/ou d'un critère de vitesse Vit des points cibles du premier groupe CL1, pour chaque critère on calcule un écart-type ECT.

Ainsi, l'écart-type ECT se calcule selon la formule suivante :

$$\sigma_X = \sqrt{\frac{1}{n}\sum_{i=1}^{n}(x_i - \overline{x})^2} \quad \text{où : } \overline{x} = \frac{1}{n}\sum_{i=1}^{n} x_i.$$

avec :

- $X_i$ la vitesse radiale d'un point cible Pt d'un premier groupe CL1 ;
- $\overline{X}$ la moyenne des vitesses radiales de tous les points cibles Pt du premier groupe CL1 ;
- n le nombre de points cibles du premier groupe CL1.

On utilise la même formule pour la puissance P.

On rappelle que la vitesse radiale Vr est fournie par le radar RAD pour chaque point cible Pt comme vu précédemment. Il en est de même pour la puissance P.

Afin de déterminer l'homogénéité d'un groupe, on compare l'écart-type calculé en puissance ECTp à un seuil de puissance THp et l'écart-type calculé en vitesse ECTvit à un seuil de vitesse THvit.

Dans un mode de réalisation non limitatif, le seuil de puissance THp est égal à 4dB. Ce seuil est déterminé de façon empirique et représente une différence de puissance entre des objets cibles différents tels qu'un camion, une voiture ou encore une moto.

Dans un mode de réalisation non limitatif, le seuil de vitesse THvit est égal à 3m/s. Ce seuil est déterminé de façon empirique et permet de différencier deux objets cibles proches l'un de l'autre ou encore mobile et fixe.

Dans un exemple non limitatif, pour déterminer les seuils THp et THvit de façon empirique, on fait une étude statistique sur les écarts de puissance/vitesse concernant des groupes de points cibles correspondant à deux objets réels distincts.

Ainsi, dans un mode de réalisation non limitatif, on vérifie qu'un groupe est homogène de la manière suivante :

- a) si l'écart-type en vitesse ECTv dépasse le seuil de vitesse THvit, alors, cela signifie que le premier groupe CL1 est hétérogène, et on effectue donc la cinquième étape 5) ci-dessous ;
- b) Sinon on vérifie l'écart-type en puissance ECTp, et s'il dépasse le seuil de puissance THp, alors cela signifie que le premier groupe CL1 est hétérogène, et on effectue donc la cinquième étape 5) ci-dessous ;
- c) Sinon, cela signifie que les deux écart-types ECT (en puissance et en vitesse) sont inférieurs à leur seuil THp et THvit respectifs, et en conséquence cela signifie que le premier groupe CL1 est homogène. Dans ce cas, on passe directement à la septième étape 7) décrite plus loin.

Ainsi, si un premier groupe CL1 de points cibles Pt a une hétérogénéite de vitesse, cela signifie que ce groupe de points cibles correspond à deux objets cibles réels distincts.

Ainsi, si le premier groupe CL1 est hétérogène, dans une **cinquième étape 5)**, on en déduit deux points cibles de référence Ref1 et Ref2 tels qu'ils soient respectivement le plus proche des valeurs Val suivantes :

$$Val1 = \overline{V}almean + ECT$$

$$Val2 = \overline{V}almean - ECT$$

et dans un mode de réalisation non limitatif, on regroupe des points cibles d'un premier groupe CL1 autour des deux points cibles de référence Ref1, Ref2, le tout formant deux deuxièmes groupes CL2. Un deuxième groupe CL2 est donc un sous groupe d'un premier groupe CL1.

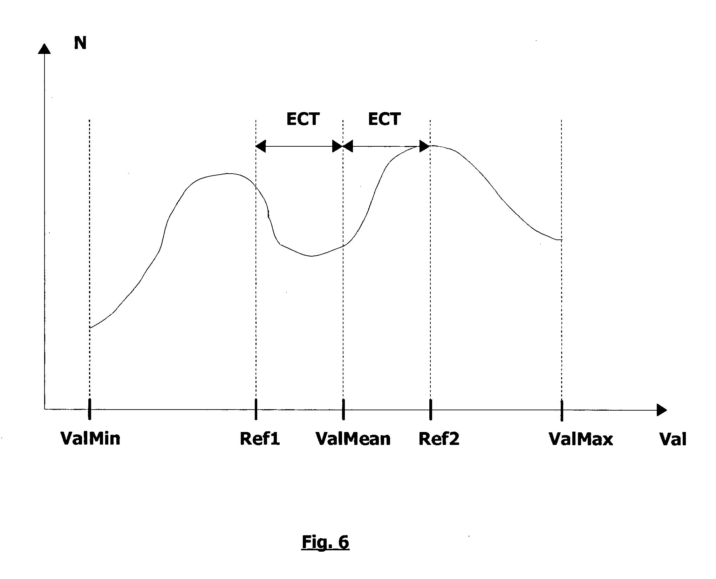

Ainsi, comme illustré sur la Fig. 6, lorsqu'un groupe est hétérogène, cela suppose que selon au moins un des deux critères (en puissance et/ou en vitesse), on a un étalement des valeurs sur une plage de valeurs minimum Valmin et maximum Valmax. Par rapport à la valeur moyenne Valmean, une portion des valeurs correspondant aux points cibles Pt est située en dessous et une portion au dessus.

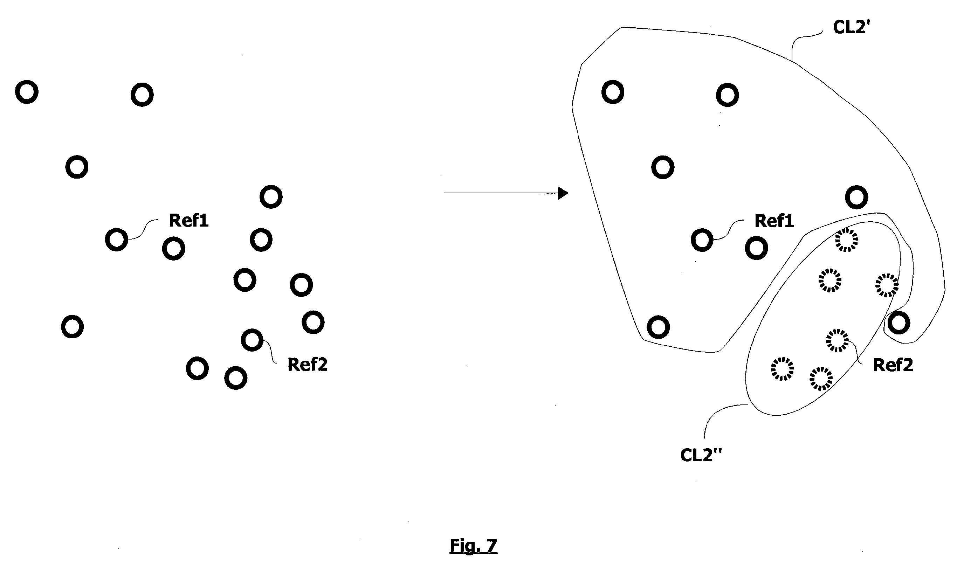

Deux points de référence Ref1 et Ref2 sont illustrés à la Fig. 7 dans un exemple non limitatif.

Dans un mode de réalisation non limitatif, le regroupement en un deuxième groupe CL2 s'effectue selon une méthode agglomérative avec pour critère une minimisation de l'inertie d'un groupe.

Cela permet de regrouper les points cibles d'un premier groupe CL1 autour d'un point cible de référence Ref en minimisant l'inertie du deuxième groupe CL2 ainsi créé.

L'inertie est ici un critère d'homogénéité d'un deuxième groupe.

En effet, chaque association d'un point à un groupe influence l'inertie dudit groupe. Plus on augmente l'inertie du groupe et plus l'hétérogénéité du groupe augmente. Donc, pour un point cible donné, on calcule l'augmentation de l'inertie pour chaque deuxième groupe. On associe donc le point cible avec le deuxième groupe pour lequel il influencera le moins l'hétérogénéité du groupe soit le groupe pour lequel il augmentera le moins l'inertie.

A cet effet, dans une variante de réalisation non limitative, on utilise un indice de Ward WI appliqué à une vitesse ou à une puissance. Dans un mode de réalisation non limitatif de cette variante, on utilise le centre de gravité d'un poids d'un point cible Pt (ici la vitesse ou la puissance), au lieu d'utiliser de manière classique une distance en utilisant directement le poids d'un point cible Pt. Le fait d'utiliser la vitesse ou la puissance est plus efficace que d'utiliser la distance, cette dernière ayant déjà été utilisée lors du regroupement « spatial » vu précédemment.

Cet indice de Ward WI permet de quantifier l'augmentation de l'inertie sans pour autant calculer l'inertie du groupe.

Ainsi, pour chaque point cible Pt, on calcule deux fois l'indice de Ward WI (un pour chacun des deux deuxièmes groupes CL2 obtenus) et on associe le point cible au deuxième groupe ayant l'indice de Ward WI le plus petit.

Ainsi, on a la formule suivante pour l'indice de Ward appliqué au critère de vitesse Vit vu précédemment :

$$WIv = \frac{Va * \overline{V}}{Va + \overline{V}} * \sum_{1}^{n} (Va - Vi)^2$$

avec :

- v la moyenne des vitesses Vit des points cibles d'un deuxième groupe CL2 ;
- n, le nombre de points dans le deuxième groupe CL2 ; et
- Va, la vitesse du point cible à agglomérer.

Ainsi, on a la formule suivante pour l'indice de Ward appliqué au critère de puissance P vu précédemment :

$$WIp = \frac{Pa * \overline{P}}{Pa + \overline{P}} * \sum_{1}^{n} (Pa - Pi)^2$$

avec :

- $\overline{P}$ la moyenne des puissances P des points cibles d'un deuxième groupe CL2 ;
- n, le nombre de points dans le deuxième groupe CL2 ; et
- Pa, la puissance du point cible à agglomérer.

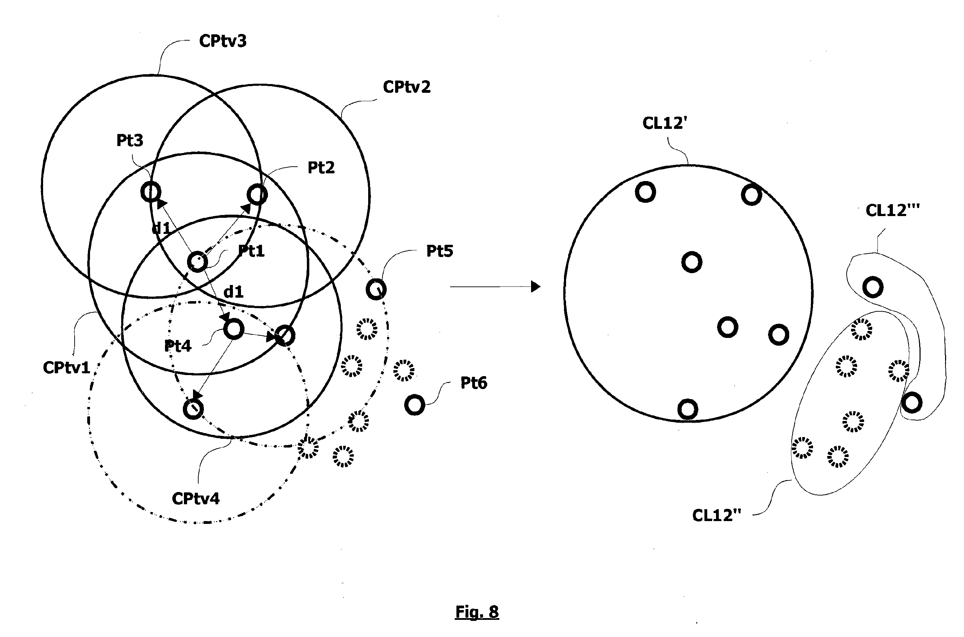

On obtient ainsi deux deuxièmes groupes homogènes CL2' et CL2" tels qu'illustrés sur l'exemple de la Fig. 7, pour chacun des critères de puissance P et de vitesse Vit.
On notera que dans le mode de réalisation décrit à la quatrième étape 4), selon le cas a) (ECTv > THvit), on utilise l'indice de Ward appliqué à la vitesse WIv, selon le cas b) (ECTp > THp), on utilise l'indice de Ward appliqué à la puissance WIp.
**Dans une sixième étape 6)**, dans un mode de réalisation non limitatif, à partir d'au moins un point cible Pt d'un deuxième groupe CL2, on forme un premier groupe CL1 avec des points cibles voisins Ptv en fonction d'une première caractéristique déterminée c1.
On refait ainsi un regroupement « spatial » tel que vu à l'étape 3). On assure ainsi la concentration spatiale des points.
Dans un mode de réalisation non limitatif, la première caractéristique déterminée c1 est une distance inférieure à un seuil de distance d1 entre un point cible Pt et des points cibles voisins Ptv, comme vu précédemment.
Ainsi, comme on peut le voir sur la Fig. 8, on obtient, à partir des deux groupes homogènes CL2' et CL2", trois premiers groupes CL12', CL12" et CL12'".
Puis, comme vu précédemment à la troisième étape, on supprime tout premier groupe CL12 comprenant un nombre de points cibles inférieur à un premier nombre déterminé nb1. Dans un exemple non limitatif, le premier nombre déterminé nb1 est égal à 3.
Cela permet de supprimer le bruit. Ainsi, dans l'exemple de la Fig. 8, le groupe CL12"' est supprimé car il ne comprend que deux points, le point Pt5 et pt6. Ce groupe est trop petit pour être considéré comme un groupe et donc comme un objet cible O potentiel.
Cette sixième étape permet de différencier deux objets cibles qui sont assez proches en distance et qui ont des vitesses différentes, ou qui sont proches en vitesse mais avec des puissances différentes.
**Dans une septième étape 7)**, on calcule une position POS d'un groupe formé CL1 ; CL2 ; CL12 par rapport au véhicule automobile sur le nombre de cycles déterminé Ncy, un groupe formé CL1 ; CL2 ; CL12 correspondant à un objet cible O.
On notera que le calcul de la position d'un groupe est appliqué pour :

- un premier groupe CL1 (dans le cas où un premier groupe est homogène tel que décrit à la quatrième étape)
- un premier groupe CL21 (dans le cas où il est obtenu dans la sixième étape) ; ou
- pour un deuxième groupe CL2 (dans le cas où un premier groupe est hétérogène tel que décrit à la cinquième étape et où la sixième étape n'est pas exécutée).

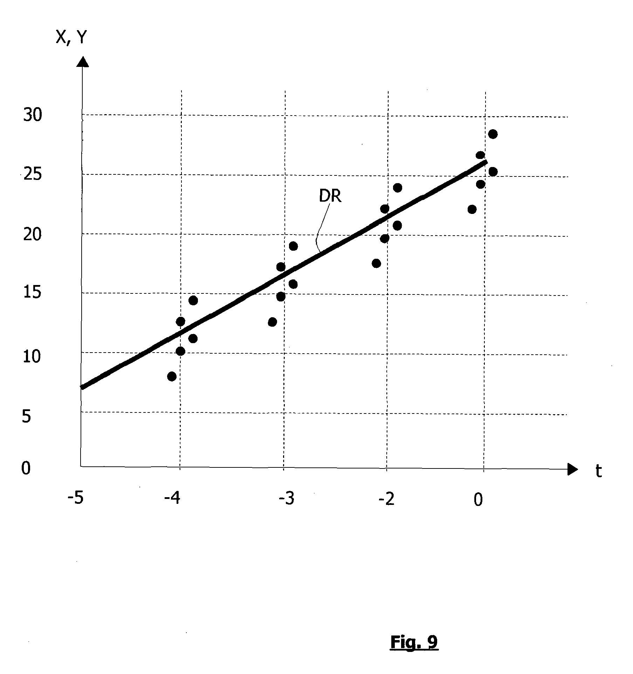

Dans un mode de réalisation non limitatif, le calcul d'une position d'un groupe CL1, CL2 s'effectue latéralement et longitudinalement par rapport au véhicule automobile V.
Dans une variante de réalisation non limitative, le calcul d'une position s'effectue par une régression linéaire dans le temps. Ainsi, on aura deux régressions linéaires dans le temps, chacune associée respectivement à la position latérale (x), et à la position longitudinale (y).
La régression linéaire s'effectue de la manière suivante :
Un groupe comporte un nuage de points composé de cibles retournées par le radar sur le nombre de cycles déterminés Ncy, ici 5 cycles, donc à l'instant t-4, t-3, t-2, t-1 et t, tel qu'illustré schématiquement sur la Fig. 9, dans un exemple non limitatif. A chaque instant il y a donc des nuages de points cibles plus ou moins éparpillés spatialement par rapport au véhicule automobile V.
Selon la régression linéaire, on recherche une droite DR minimisant les écarts entre ladite droite et les points cibles.
Puis, grâce à cette droite DR, on estime la position du groupe de points à l'instant t.

Un nuage de points est sensé être un véhicule (camion, voiture, moto etc.) dans la réalité, ainsi calculer la position d'un nuage de points nous donne une estimation de la position réelle d'un objet cible O.

Ainsi, au fur et à mesure du déplacement d'un objet cible O, on détermine sa position POS latérale (y) et longitudinale (x).

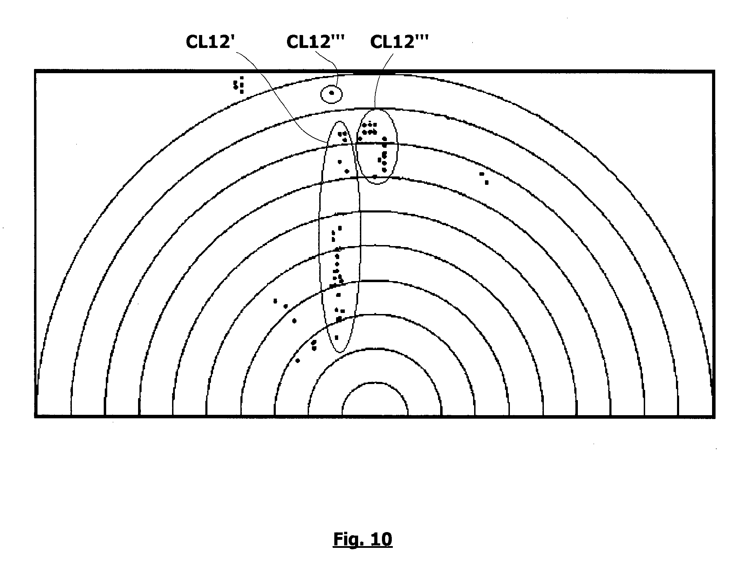

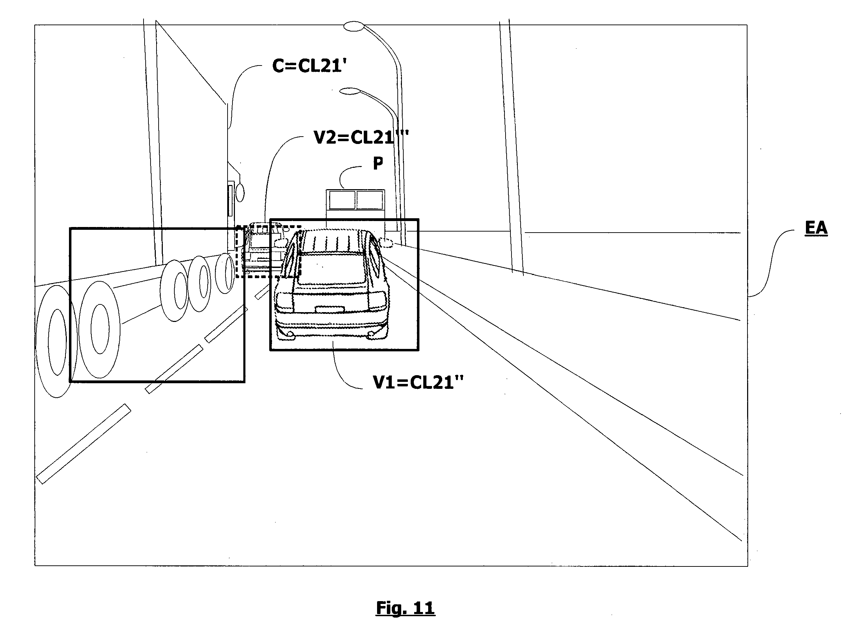

Ainsi, comme le montre l'exemple non limitatif de la Fig. 10, on obtient le déplacement de trois groupes CL21' et CL21", et CL2"' correspondant à trois objets cibles qui sont dans l'exemple pris une première voiture V1, un camion C et une deuxième voiture V2, tels qu'illustrés de façon schématique sur la Fig. 11. Cette Fig. montre une visualisation schématique des objets reconnus.

**Dans une huitième étape 8)**, on applique un filtre de Kalman sur deux positions successives d'un groupe formé CL1, CL2.

Le filtre prend en compte des bruits liés aux capteurs, il corrige et prédit l'état d'un modèle étudié, ici, la position d'un objet cible vu par le radar RAD.

Le filtre corrige la mesure de la position à l'instant t en fonction de sa prédiction à l'instant t-1, et prédit la position de la mesure à l'instant t+1.

Cela permet de stabiliser la position POS (x, y) des objets cibles O détectés par le radar RAD. On obtient donc des positions stables dans le temps.

Le filtre de Kalmann étant connu de l'homme du métier, il n'est pas décrit plus en détail ici.

Ainsi, les étapes 1 à 8 décrites ci-dessus sont exécutées en temps réel, au fur et à mesure du déplacement du véhicule V considéré et donc des objets cibles potentiels se trouvant dans l'environnement dudit véhicule V.

Ainsi, le procédé décrit permet de détecter un objet cible dans l'environnement du véhicule considéré V, et en particulier de différencier un objet cible d'un autre objet cible, notamment lorsque par exemple deux objets cibles tels que deux véhicules sont proches, comme dans l'exemple sur la Fig. 11 avec le camion C et la première voiture V1.

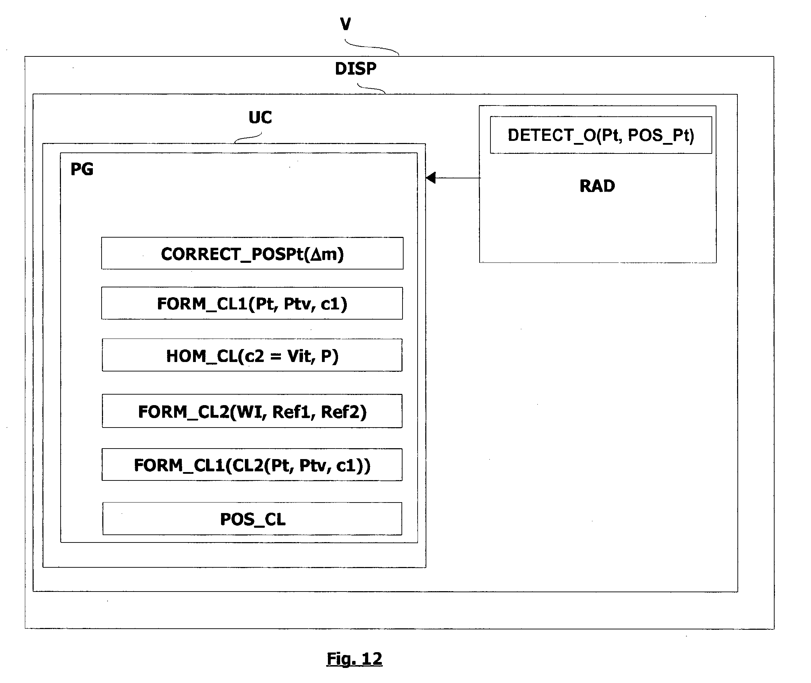

Le procédé de l'invention est mis en oeuvre par un dispositif DISP de détection d'un objet cible O pour véhicule automobile V, représenté à la Fig. 12.

Ce dispositif DISP est intégré dans le véhicule automobile V.

Ce dispositif DISP comporte notamment une unité de contrôle UC pour :

- corriger une position POS_Pt d'au moins un point cible Pt par rapport à un véhicule automobile V, en fonction d'un déplacement du véhicule automobile sur un nombre de cycles déterminé Ncy ;
- à partir d'au moins un point cible Pt1, former un premier groupe CL1 avec des points cibles voisins Ptv1 en fonction d'une première caractéristique déterminée c1 ;
- vérifier si le premier groupe CL1 est homogène en fonction d'une deuxième caractéristique déterminée c2 ; et
- calculer une position POS d'un groupe formé CL1, CL2 par rapport au véhicule automobile sur le nombre de cycles déterminé Ncy, un groupe formé CL1, CL2 correspondant à un objet cible O.

Selon un mode de réalisation non limitatif, le dispositif DISP comporte en outre un détecteur RAD pour détecter une pluralité d'objets cibles O dans un environnement du véhicule automobile V par rapport au véhicule automobile V, résultant en une pluralité de points cibles Pt représentatifs et en leur position respective POS_Pt. Dans un exemple non limitatif, le détecteur est un radar RAD. Selon un mode de réalisation non limitatif, le radar RAD comporte les caractéristiques suivantes :

- Il fonctionne à une fréquence réglementaire de 24 Ghz et a donc un temps de cycle de 40 ms ;
- Il effectue une détection entre 0,75 et 60 mètres ;
- Il retourne jusqu'à 100 cibles ; et
- Il comporte un angle d'ouverture de 150°.

Bien entendu ces caractéristiques ne sont pas limitatives. Ainsi, par exemple, une autre fréquence peut être utilisée telle que la fréquence réglementaire de 77 Ghz.

On notera que la mise en oeuvre du procédé de détection exposé ci-dessus peut être effectuée au moyen d'un dispositif micro programmé « software », d'une logique câblée et/ou de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 12, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, l'invention présente notamment les avantages suivants :

- Elle permet d'enlever le bruit en éliminant les groupes de points dont la taille est trop petite ;
- Elle permet d'éviter de perdre des points cibles, en maintenant l'acquisition des points cibles sur un nombre de cycles déterminé ;
- Elle permet de regrouper les points cibles qui sont le plus homogènes possibles et donc qui appartiennent potentiellement à un même objet cible réel ;
- Elle permet de différencier un objet cible d'un autre au moyen de la puissance ;
- Elle permet de différencier deux objets cibles qui se trouvent à proximité l'un de l'autre spatialement et ayant des écarts de vitesse, et en donc en particulier un objet cible mobile d'un objet cible fixe.
- Elle permet de stabiliser le calcul d'une position d'un objet cible dans le temps grâce au filtre de Kalmann ;
- Elle permet de s'intégrer facilement dans un module utilisant déjà la fonction de détection automatique par radar ; et
- Elle est simple, rapide et économique à mettre en oeuvre du fait du traitement simple, rapide et économique des différentes étapes.

**Revendications**

**1.** Procédé de détection d'un objet cible (O) pour véhicule automobile (V), comportant les étapes de

- corriger une position (POS_Pt) d'au moins un point cible (Pt) par rapport à un véhicule automobile (V), en fonction d'un déplacement du véhicule automobile sur un nombre de cycles déterminé (Ncy) ;
- à partir d'au moins un point cible (Pt1), former un premier groupe (CL1) avec des points cibles voisins (Ptv1) en fonction d'une première caractéristique déterminée (c1) ;
- vérifier si le premier groupe (CL1) est homogène en fonction d'une deuxième caractéristique déterminée (c2) ; et
- calculer une position (POS) d'un groupe formé (CL1, CL2) par rapport au véhicule automobile sur le nombre de cycles déterminé (Ncy), un groupe formé (CL1, CL2) correspondant à un objet cible (O).

**caracterisé en ce que** la deuxième caractéristique déterminée (c2) est une puissance (P), et **en ce que** la première caractéristique déterminée (c1) est une distance inférieure à un seuil de distance (d1) entre un point cible (Pt1, Pt2) et des points cibles voisins (Ptv1 , Ptv2).

**2.** Procédé de détection selon la revendication 1, selon lequel il comporte une étape supplémentaire de détecter une pluralité d'objets cibles dans un environnement du véhicule automobile par rapport au véhicule automobile, résultant en une pluralité de points cibles représentatifs et en leur position respective.

**3.** Procédé de détection selon la revendication 1 ou 2, selon lequel l'étape de former un premier groupe (CL1) comporte une sous-étape d'appliquer la première caractéristique déterminée (c1) de manière successive au points voisins (Ptv1).

**4.** Procédé de détection selon l'une des revendications précédentes, selon lequel il comporte une étape supplémentaire de supprimer tout premier groupe (CL1) comprenant un nombre de points cibles inférieur à un premier nombre déterminé (nb1).

**5.** Procédé de détection selon l'une des revendications précédentes, selon lequel la deuxième caractéristique déterminée (c2) est une vitesse (Vit).

**6.** Procédé de détection selon l'une des revendications précédentes, selon lequel il comporte une étape supplémentaire selon laquelle si un groupe est hétérogène, on regroupe des points cibles d'un premier groupe (CL1) autour de deux points cibles de référence (Ref1, Ref2), le tout formant deux deuxièmes groupes (CL2), de manière à minimiser l'inertie d'un deuxième groupe (CL2).

**7.** Procédé de détection selon la revendication précédente, selon lequel le regroupement en un deuxième groupe (CL2) s'effectue au moyen d'un indice de Ward.

**8.** Procédé de détection selon l'une des revendications précédentes 6 ou 7, selon lequel il comporte une étape supplémentaire de : à partir d'au moins un point cible (Pt2) d'un deuxième groupe (CL2), former un premier groupe (CL1) avec des points cibles voisins (Ptv2) en fonction de la première caractéristique déterminée (c1).

**9.** Procédé de détection selon l'une des revendications précédentes, selon lequel le calcul d'une position d'un groupe (CL1, CL2) s'effectue latéralement et longitudinalement.

**10.** Procédé de détection selon l'une des revendications précédentes, selon lequel il comporte une étape supplémentaire d'appliquer un filtre de Kalman sur deux positions successives d'un groupe formé (CL1, CL2).

**11.** Dispositif de détection d'un objet cible (O) pour véhicule automobile (V), **caractérisé en ce qu'**il comporte une unité de contrôle (UC) pour :

- corriger une position (POS_Pt) d'au moins un point cible (Pt) par rapport à un véhicule automobile (V), en fonction d'un déplacement du véhicule automobile sur un nombre de cycles déterminé (Ncy) ;
- à partir d'au moins un point cible (Pt1), former un premier groupe (CL1) avec dés points cibles voisins (Ptv1) en fonction d'une première caractéristique déterminée (c1) ;
- vérifier si le premier groupe (CL1) est homogène en fonction d'une deuxième caractéristique déterminée (c2) ; et
- calculer une position (POS) d'un groupe formé (CL1, CL2) par rapport au véhicule automobile sur le nombre de cycles déterminé (Ncy), un groupe formé (CL1, CL2) correspondant à un objet cible (O).

**caractérisé en ce qu'**il permet la mise en oeuvre d'un procédé selon l'une des revendications précédentes.

**12.** Dispositif de détection selon la revendication précédente, selon lequel il comporte en outre un détecteur (RAD) pour détecter une pluralité d'objets cibles (O) dans un environnement du véhicule automobile (V) par rapport au véhicule automobile (V), résultant en une pluralité de points cibles (Pt) représentatifs et en leur position respective (POS_Pt).

**13.** Produit programme d'ordinateur (PG) comportant une ou plusieurs séquences d'instructions exécutables par une unité de traitement d'information, **caractérisé en ce que** l'exécution desdites séquences d'instructions permettant une mise en oeuvre du procédé selon l'une quelconque des revendications précédentes 1 à 10.

**Patentansprüche**

**1.** Verfahren zum Erfassen eines Zielobjektes (O) für ein Kraftfahrzeug (V), das die Schritte umfasst:

- Korrigieren einer Position (POS_Pt) wenigstens eines Zielpunktes (Pt) bezüglich eines Kraftfahrzeugs (V) in Abhängigkeit der Fortbewegung des Kraftfahrzeugs über eine bestimmte Zyklenzahl (Ncy);
- Bilden einer ersten Gruppe (CL1) mit benachbarten Zielpunkten (Ptv1) in Abhängigkeit eines ersten bestimmten Merkmals (c1) ausgehend von wenigstens einem Zielpunkt (Pt1);
- Prüfen, ob die erste Gruppe (CL1) in Abhängigkeit eines zweiten bestimmten Merkmals (c2) homogen ist; und
- Berechnen einer Position (POS) einer gebildeten Gruppe (CL1, CL2) bezüglich des Kraftfahrzeugs über die bestimmte Zyklenzahl (Ncy), wobei eine gebildete Gruppe (CL1, CL2) einem Zielobjekt (O) entspricht,

**dadurch gekennzeichnet, dass** das zweite bestimmte Merkmal (c2) eine Leistung (P) ist, und dass das erste bestimmte Merkmal (c1) eine Entfernung unterhalb einer Entfernungsschwelle (d1) zwischen einem Zielpunkt (Pt1, Pt2) und benachbarten Zielpunkten (Ptv1, Ptv2) ist.

**2.** Erfassungsverfahren nach Anspruch 1,
gemäß dem es einen zusätzlichen Schritt umfasst, um eine Vielzahl von Zielobjekten in einer Umgebung des Kraftfahrzeugs bezüglich des Kraftfahrzeugs zu erfassen, aus denen eine Vielzahl repräsentativer Zielpunkte und deren jeweilige Position resultieren.

**3.** Erfassungsverfahren nach Anspruch 1 oder 2,
gemäß dem der Schritt zum Bilden einer ersten Gruppe (CL1) einen Unterschritt umfasst, um das erste bestimmte Merkmal (c1) nacheinander auf die benachbarten Punkte (Ptv1) anzuwenden.

**4.** Erfassungsverfahren nach einem der vorhergehenden Ansprüche,

gemäß dem es einen zusätzlichen Schritt umfasst, um jede erste Gruppe (CL1), die eine Anzahl an Zielpunkten aufweist, die kleiner ist als eine erste bestimmte Anzahl (nb1), unberücksichtigt zu lassen.

**5.** Erfassungsverfahren nach einem der vorhergehenden Ansprüche,
gemäß dem das zweite bestimmte Merkmal (c2) eine Geschwindigkeit (Vit) ist.

**6.** Erfassungsverfahren nach einem der vorhergehenden Ansprüche,
gemäß dem es einen zusätzlichen Schritt umfasst, dem zufolge, wenn eine Gruppe heterogen ist, die Zielpunkte einer ersten Gruppe (CL1) um zwei Bezugszielpunkte (Ref1, Ref2) herum angeordnet werden, wobei dadurch zwei zweite Gruppen (CL2) gebildet werden, um die Trägheit einer zweiten Gruppe (CL2) zu minimieren.

**7.** Erfassungsverfahren nach dem vorhergehenden Anspruch,
gemäß dem die Anordnung in einer zweiten Gruppe (CL2) mittels eines Ward-Index erfolgt.

**8.** Erfassungsverfahren nach einem der vorhergehenden Ansprüche 6 oder 7, gemäß dem es einen zusätzlichen Schritt umfasst, um anhand wenigstens eines Zielpunktes (Pt2) einer zweiten Gruppe (CL2) eine erste Gruppe (CL1) mit benachbarten Zielpunkten (Ptv2) in Abhängigkeit des ersten bestimmten Merkmals (c1) zu bilden.

**9.** Erfassungsverfahren nach einem der vorhergehenden Ansprüche,
gemäß dem das Berechnen einer Position einer Gruppe (CL1, CL2) seitwärts und längs erfolgt.

**10.** Erfassungsverfahren nach einem der vorhergehenden Ansprüche,
gemäß dem es einen zusätzlichen Schritt umfasst, um einen Kalman-Filter auf zwei aufeinanderfolgende Positionen einer gebildeten Gruppe (CL1, CL2) anzuwenden.

**11.** Vorrichtung zum Erfassen eines Zielobjektes (O) für ein Kraftfahrzeug (V), **dadurch gekennzeichnet, dass** sie eine Steuereinheit (UC) umfasst, zum

- Korrigieren einer Position (POS_Pt) wenigstens eines Zielpunktes (Pt) bezüglich eines Kraftfahrzeugs (V) in Abhängigkeit einer Fortbewegung des Kraftfahrzeugs über eine bestimmte Zyklenzahl (Ncy);
- Bilden einer ersten Gruppe (CL1) mit benachbarten Zielpunkten (Ptv1) in Abhängigkeit eines ersten bestimmten Merkmals (c1) ausgehend von wenigstens einem Zielpunkt (Pt1);
- Prüfen, ob die erste Gruppe (CL1) in Abhängigkeit eines zweiten bestimmten Merkmals (c2) homogen ist; und
- Berechnen einer Position (POS) einer gebildeten Gruppe (CL1, CL2) bezüglich des Kraftfahrzeugs über die bestimmte Zyklenzahl (Ncy), wobei eine gebildete Gruppe (CL1, CL2) einem Zielobjekt (O) entspricht,

**dadurch gekennzeichnet, dass** das zweite bestimmte Merkmal (c2) eine Leistung (P) ist, und dass das erste bestimmte Merkmal (c1) eine Entfernung unterhalb einer Entfernungsschwelle (d1) zwischen einem Zielpunkt (Pt1, Pt2) und benachbarten Zielpunkten (Ptv1, Ptv2) ist.

**12.** Erfassungsvorrichtung nach dem vorhergehenden Anspruch,
gemäß der sie ferner einen Sensor (RAD) zum Erfassen einer Vielzahl von Zielobjekten (O) in einer Umgebung des Kraftfahrzeugs (V) bezüglich des Kraftfahrzeugs (V) umfasst, aus denen eine Vielzahl repräsentativer Zielpunkte (Pt) und deren jeweilige Position (POS_Pt) resultieren.

**13.** Computerprogrammprodukt (PG) mit einer oder mehreren Befehlsfolgen, die durch eine Informationsverarbeitungseinheit ausführbar sind,
**dadurch gekennzeichnet, dass** die Ausführung der Befehlsfolgen eine Durchführung des Verfahrens nach einem der vorhergehenden Ansprüche 1 bis 10 erlaubt.

## Claims

**1.** Method of detecting a target object (O) for a motor vehicle (V) comprising the steps of:

- correcting a position (POS_Pt) of at least one target point (Pt) relative to a motor vehicle (V) depending on a movement of the motor vehicle over a given number of cycles (Ncy);
- starting from at least one target point (Pt1), forming a first group (CL1) with adjacent target points (Ptv1) depending on a first given characteristic (c1);
- verifying if the first group (CL1) is homogeneous depending on a second given characteristic (c2); and
- calculating a position (POS) of a formed group (CL1, CL2) relative to the motor vehicle over the given number of cycles (Ncy), a formed group (CL1, CL2) corresponding to a target object (O),

**characterised in that** the second given characteristic (c2) is a power (P) and **in that** the first given characteristic (c1) is a distance less than a distance threshold (d1) between a target point (Pt1, Pt2) and adjacent target points (Ptv1, Ptv2).

2. Detection method according to claim 1, wherein it includes an additional step of detecting a plurality of target objects in an environment of the motor vehicle relative to the motor vehicle, resulting in a plurality of representative target points and their respective positions.

3. Detection method according to claim 1 or 2, wherein the step of forming a first group (CL1) includes a sub-step of applying the first given characteristic (c1) successively to the adjacent points (Ptv1).

4. Detection method according to any one of the preceding claims, wherein it includes an additional step of eliminating any first group (CL1) comprising a number of target points less than a first given number (nb1).

5. Detection method according to any one of the preceding claims, wherein the second given characteristic (c2) is a speed (Vit).

6. Detection method according to any one of the preceding claims, wherein it includes an additional step in which, if a group is heterogeneous, target points of a first group (CL1) are grouped around two reference target points (Ref1, Ref2), the combination forming two second groups (CL2), so as to minimise the inertia of a second group (CL2).

7. Detection method according to the preceding claim, wherein the grouping into a second group (CL2) is effected by means of a Ward Index.

8. Detection method according to any one of the preceding claims 6 or 7, wherein it includes an additional step of: starting from at least one target point (Pt2) of a second group (CL2), forming a first group (CL1) with adjacent target points (Ptv2) depending on the first given characteristic (c1).

9. Detection method according to any one of the preceding claims, wherein a position of a group (CL1, CL2) is calculated laterally and longitudinally.

10. Detection method according to any one of the preceding claims, wherein it includes an additional step of applying a Kalman filter to two successive positions of a formed group (CL1, CL2).

11. Device for detecting a target object (O) for a motor vehicle (V), **characterised in that** it comprises a control unit (UC) for:

- correcting a position (POS_Pt) of at least one target point (Pt) relative to a motor vehicle (V), depending on a movement of the motor vehicle over a given number of cycles (Ncy);
- starting from at least one target point (Pt1), forming a first group (CL1) with adjacent target points (Ptv1) depending on a first given characteristic (c1);
- verifying if the first group (CL1) is homogeneous depending on a second given characteristic (c2); and
- calculating a position (POS) of a formed group (CL1, CL2) relative to the motor vehicle over the given number of cycles (Ncy), a formed group (CL1, CL2) corresponding to a target object (O), **characterised in that** the second given characteristic (c2) is a power (P) and **in that** the first given characteristic (c1) is a distance less than a distance threshold (d1) between a target point (Pt1, Pt2) and adjacent target points (Ptv1, Ptv2).

12. Detection device according to the preceding claim, wherein it additionally includes a detector (RAD) for detecting a plurality of target objects (O) in an environment of the motor vehicle (V) relative to the motor vehicle (V), resulting in a plurality of representative target points (Pt) and their respective positions (POS_Pt).

13. Computer program product (PG) including one or more sequences of instructions executable by an information processing unit, **characterised in that** the execution of said sequences of instructions enables the implementation of the method according to the preceding claims 1 to 10.

1
DETECT_O(Pt, POS_Pt)
2
CORRECT_POSPt(Δm)
3
FORM_CL1(Pt, Ptv, c1)
4
HOM_CL(c2 = Vit, P)
5
FORM_CL2(WI, Ref1, Ref2)
6
FORM_CL1(CL2(Pt, Ptv, c1))
7
POS_CL

Fig. 1

EA
LP
P
V1
V2
C

Fig. 2

Ncy = 1
Pt2
Pt1
Pt3
10M
20M

Fig. 3

Pt2
Pt1
Pt3
Ncy = 5

Fig. 4

CPtv3
Pt5
CPtv2
Pt3
Pt2
d1
d1
Pt1
d1
Pt4
CPtv1
CPtv4
CL1'
Pt5
CL1

Fig. 5

N
Val
ValMax
Ref2
ValMean
Ref1
ValMin
ECT
ECT

Fig. 6

CL2'
Ref2
Ref1
CL2''

Ref2
Ref1

Fig. 7

CPtv3
CPtv2
CPtv1
CPtv4
Pt1
Pt2
Pt3
Pt4
Pt5
Pt6
d1
d1
CL12'
CL12''
CL12'''

Fig. 8

X, Y
30
25
20
15
10
5
0
t
-5
-4
-3
-2
0
DR

**Fig. 9**

CL12'''
CL12'''
CL12'

Fig. 10

EA
C=CL21'
V2=CL21'''
P
V1=CL21''

Fig. 11

V
DISP
RAD
DETECT_O(Pt, POS_Pt)
UC
PG
CORRECT_POSPt(Δm)
FORM_CL1(Pt, Ptv, c1)
HOM_CL(c2 = Vit, P)
FORM_CL2(WI, Ref1, Ref2)
FORM_CL1(CL2(Pt, Ptv, c1))
POS_CL

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6249243 B